(19) **Europäisches Patentamt / European Patent Office / Office européen des brevets**

(11) **EP 3 244 169 B1**

(12) **FASCICULE DE BREVET EUROPEEN**

(45) Date de publication et mention de la délivrance du brevet:
**20.02.2019 Bulletin 2019/08**

(51) Int Cl.:
*G01D 5/26* [(2006.01)]   *G01L 9/00* [(2006.01)]
*G01D 5/34* [(2006.01)]   *G01N 29/036* [(2006.01)]

(21) Numéro de dépôt: **17167899.8**

(22) Date de dépôt: **25.04.2017**

(54) **SYSTEME DE MESURE RESONANT A RESOLUTION AMELIOREE**

RESONANZMESSSYSTEM MIT VERBESSERTER AUFLÖSUNG

RESONANT MEASUREMENT SYSTEM WITH IMPROVED RESOLUTION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.04.2016 FR 1653901**

(43) Date de publication de la demande:
**15.11.2017 Bulletin 2017/46**

(73) Titulaire: **Commissariat à l'énergie atomique et aux énergies alternatives**
**75015 Paris (FR)**

(72) Inventeurs:
• **LEONCINO, Luca**
  **38000 GRENOBLE (FR)**
• **HENTZ, Sébastien**
  **38170 SEYSSINET-PARISET (FR)**
• **JOURDAN, Guillaume**
  **38000 GRENOBLE (FR)**
• **SANSA PERNA, Marc**
  **38000 GRENOBLE (FR)**

(74) Mandataire: **Brevalex**
  **95, rue d'Amsterdam**
  **75378 Paris Cedex 8 (FR)**

(56) Documents cités:
**WO-A1-2012/113034   WO-A2-2005/081929**
**AU-A1- 2016 200 064   US-A1- 2009 238 515**

**Description**

**DOMAINE TECHNIQUE ET ÉTAT DE LA TECHNIQUE ANTÉRIEURE**

La présente invention se rapporte à un système de mesure mettant en oeuvre des systèmes microélectromécaniques (MEMS pour microelectromechanical systems en terminologie anglo-saxonne) et/ou des systèmes nanoélectromécaniques (NEMS pour nanoelectromechanical systems en terminologie anglo-saxonne) résonants qui peuvent par exemple être utilisés dans l'analyse de gaz, pour la spectrométrie de masse pour la détection d'espèces chimiques ou biologiques, comme capteurs de force ou systèmes inertiels, tels qu'un accéléromètre résonant, un gyromètre un capteur de pression.

Un capteur résonant comporte un résonateur mécanique mis en vibration à sa fréquence de résonance par des moyens d'excitation. La fréquence de résonance du résonateur varie en fonction de paramètres de l'environnement, en mesurant la variation de la fréquence de résonance il est possible de déterminer le ou les paramètres ayant modifiés la fréquence de résonance du résonateur mécanique. Le résonateur est par exemple une poutre suspendue à une partie fixe, la poutre étant mise en vibration à sa fréquence de résonance par des moyens capacitifs. Par exemple des particules se déposant sur la poutre provoquent un décalage de la fréquence de résonance, l'amplitude de ce décalage est reliée à la masse de matière déposée.

Le déplacement de la poutre est par exemple détecté par des moyens piézoélectriques comportant typiquement deux jauges de contrainte montées en différentielle, les jauges étant suspendues entre la poutre et la partie fixe.

La résolution d'un tel capteur est déterminée par sa sensibilité, i.e. la relation entre la fréquence de résonance et le paramètre mesuré, et la stabilité en fréquence, i.e. la variation minimale de fréquence de résonance.

La sensibilité en masse du capteur peut s'écrire

$$S = \frac{\Delta f}{\Delta m} = \frac{f_r}{2M}$$

$\Delta m$ est la variation de masse sur la partie mobile du capteur, $\Delta f$ est la variation de fréquence mesurée résultant de la variation de masse, $f_r$ est la fréquence de résonance de la partie mobile et M la masse de la partie mobile.

Par ailleurs, la résolution en fréquence de résonance est inversement proportionnelle au rapport signal sur bruit (SNR pour Signal to Noise ratio en terminologie anglo-saxonne) et au facteur de qualité Q. Elle peut s'écrire :

$$\Delta f_r = \frac{f_r}{2Q\,SNR},$$

la résolution en masse $\Delta m$ est alors donnée par :

$$\Delta m = \frac{M}{Q\,SNR}.$$

Il apparaît donc que, pour maximiser la résolution en masse, il est souhaitable d'une part de réduire la masse M de la partie mobile et que celle-ci présente des fréquences de résonance élevées, et d'autre part de disposer de moyens de transduction offrant un SNR important.

En réduisant les dimensions de la partie mobile, on obtient à la fois une réduction de sa masse et une augmentation de la fréquence de résonance, ce qui permet d'améliorer la résolution en masse et la sensibilité en masse. Mais cette réduction de taille impose de détecter un mouvement à plus hautes fréquences.

Par ailleurs, la variation de fréquence de résonance peut ne pas résulter uniquement de la masse de particules déposées sur la partie mobile mais également de l'emplacement du dépôt des particules sur la partie mobile et de la taille de particules. Afin de réaliser une détection permettant de distinguer les effets de la masse et par exemple de l'emplacement du dépôt et/ou de la taille des particules déposées, il est utile de combiner des informations obtenues en travaillant à différents modes de fréquences de résonance. Or une détection à des modes d'ordres plus élevés implique de travailler à des fréquences encore plus élevées.

Cependant la détection à très hautes fréquences présente certains inconvénients.

Les moyens de détection piézorésistifs et capacitifs ne sont pas performants lorsque les fréquences sont supérieures à quelques centaines de MHz. Il apparaît des courts-circuits entre les éléments électriques participant à la détection, résultant de capacités parasites. Ces capacités parasites couplées aux résistances du NEMS génèrent l'apparition d'un filtre passe-bas qui empêche donc la détection à des fréquences élevées.

Le document I. Bargatin, E. B. Myers, J. Arlett, B. Gudlewski, and M. L. Roukes, "Sensitive detection of nanomechanical motion using piezoresistive signal downmixing," Appl. Phys. Lett., vol. 86, no. 13, p. 133109, 2005 décrit une méthode permettant la détection à haute fréquence de résonateurs MEMS utilisant des nanojauges de contrainte. Cette méthode est désignée « downmixing ». Elle consiste à polariser les jauges de contrainte avec un signal à une fréquence fr + Δf alors que la poutre est actionnée à la fréquence fr.

Le signal mécanique en sortie comporte alors une composante à Δf, la valeur de Δf est choisie inférieure à la fréquence de coupure de filtre passe-bas généré par les courts-circuits mentionné ci-dessus.

Cette méthode permet donc une détection à haute fréquence avec des moyens piézorésistifs.

En outre, le mode de fonctionnement par downmixing permet de réduire le fond de mesure qui est un signal parasite de même fréquence que le signal mécanique et qui se superpose à ce dernier. En effet, le circuit d'excitation et le circuit de mesure sont en général couplés l'un à l'autre par exemple de manière capacitive, inductive ou par impédance commune. Un phénomène de diaphonie entre le signal d'excitation et le signal de mesure peut apparaître. Puisque la fréquence du signal d'excitation est à f et celui du signal de mesure est à Δf par la méthode du downmixing il est possible d'éliminer par filtrage fréquentiel le fond de mesure du signal de mesure mécanique.

Cependant, les inventeurs ont déterminé que malgré l'application de la méthode de downmixing, il existait encore un fond de mesure à la fréquence de détection Δf.

De plus, la fréquence du signal de polarisation est généralement limitée à environ 300 MHz, au-delà de cette fréquence il devient complexe de polariser efficacement les jauges de contrainte. Il existe une discontinuité d'impédance entre la ligne de propagation qui est typiquement de l'ordre de 50 Ω et l'impédance de la ou des jauges qui est en pratique de plusieurs milliers d'ohms. Cette discontinuité d'impédance peut diminuer fortement le courant de polarisation au niveau des jauges qui contrôle le signal électromécanique. On observe alors une diminution de la sensibilité. Ceci a pour effet de réduire le SNR du signal du résonateur et donc de réduire la résolution de la mesure de la variation de la fréquence de résonance du résonateur.

Le document WO2005/081929 A2 décrit un système de mesure selon l'état de l'art.

## EXPOSÉ DE L'INVENTION

C'est par conséquent un but de la présente invention d'offrir un système de mesure résonant MEMS et/ou NEMS offrant une résolution élevée et présentant un fond de mesure réduit par rapport au système de mesure résonant de l'état de la technique.

Les inventeurs ont déterminé que le fond de mesure qui subsistait, résultait de la modulation de la valeur de résistance des jauges de contraintes en raison de la variation de température du fait de l'échauffement par effet Joule résultant de la circulation du courant dans les jauges induit par le circuit d'actionnement. Ils ont alors pensé à réaliser un système de mesure résonant MEMS et/ou NEMS comportant au moins une partie mobile formant un résonateur apte à être mis en vibration par une force à la fréquence fm, une fréquence d'actionnement qui produit un mouvement mécanique à cette même fréquence, par des moyens d'excitation et des moyens de détection mettant en oeuvre des moyens de détection optique, comportant une source lumineuse dont l'intensité est modulée à une fréquence fm + Δf et un dispositif optomécanique dont la fonction de transmission optique qui est au moins en partie modifiée par le déplacement de la partie mobile, et des moyens de photodétection mesurant l'intensité du signal transmis par le dispositif optomécanique. Δf peut être positif ou négatif.

Ainsi en utilisant des moyens de détection optomécaniques, en injectant un faisceau lumineux dont l'amplitude est modulée en fréquence à fm + Δf, et en excitant le résonateur à la fréquence fm, le fond de mesure est fortement réduit, tant celui résultant de la diaphonie que celui résultant de l'échauffement par effet Joule.

De plus la mise en oeuvre de moyens de détection optique permet de s'affranchir des problèmes de capacités parasites générant un filtre passe-bas, et de s'affranchir dans le cas d'un capteur fonctionnant suivant la méthode de downmixing de la discontinuité d'impédance dans le circuit de mesure et donc des problèmes de polarisation des jauges.

L'actionnement est par exemple réalisé de manière capacitive ou au moyen d'un faisceau optique. Dans le cas d'un actionnement par faisceau optique, il peut être avantageux d'utiliser un faisceau optique dont la longueur d'onde est différente de celle du faisceau de mesure, afin de maximiser les efforts générés par le faisceau optique. On choisit par exemple une fréquence qui correspond à une résonance suffisamment éloignée de celle utilisée pour la détection, ce qui peut permettre d'éliminer le faisceau d'actionnement dans le photodétecteur.

De manière avantageuse, le rapport fr/Δf est supérieur ou égal à 10.

L'élément résonant peut être une poutre ou une membrane. En variante il pourrait être formé directement par l'élément optique, comme une portion du guide d'onde qui serait suspendue ou par un anneau optique également suspendu.

De manière avantageuse, la partie mobile est reliée à la masse électrique ce qui permet de réduire encore davantage l'auto-échauffement.

La présente invention a alors pour objet un système de mesure résonant de type MEMS et/ou NEMS, comportant :

- un dispositif optomécanique comprenant au moins un élément résonant à au moins une fréquence de résonance fr et au moins un élément optique dont l'indice optique est sensible au déplacement de l'élément résonant,
- des moyens d'excitation de l'élément résonant à au moins une fréquence de fonctionnement fm,
- des moyens aptes à injecter un faisceau lumineux dont l'intensité est modulée à une fréquence f1 = fm + $\Delta$f dans le dispositif optomécanique,
- un dispositif de photodétection apte à mesurer l'intensité d'un faisceau lumineux de mesure sortant du dispositif optomécanique, l'intensité du faisceau de mesure ayant au moins une composante à une fréquence $\Delta$f.

De manière avantageuse, la fréquence de fonctionnement fm est telle que fr-(2fr/Qm) $\leq$ fm $\leq$ fr+(2fr/Qm), avec Qm le facteur de qualité mécanique de l' élément résonant.

De préférence, le rapport fr/$\Delta$f est compris entre 10 < fr/$\Delta$f < Qm.

Dans un exemple de réalisation, le dispositif optomécanique comporte un guide d'onde et un anneau optique couplé optiquement au guide d'onde, le guide d'onde étant destiné à recevoir le faisceau lumineux issu des moyens et à envoyer le faisceau lumineux transmis par le dispositif optomécanique, au dispositif de photodétection

Dans un exemple, l'élément résonant est disposé à proximité de l'anneau optique. Dans un autre exemple, l'élément résonant est formé par l'anneau optique.

Les moyens d'excitation peuvent être de type électrostatique ou de type optique.

Selon une caractéristique additionnelle, le faisceau lumineux transmis a également une composante à une fréquence 2fm + $\Delta$f et/ou fm + $\Delta$f, le dispositif de photodétection comportant au moins un photodétecteur dont la bande passante est telle que la composante à la fréquence 2fm + $\Delta$f et/ou fm + $\Delta$f est en dehors de ladite bande passante. En variante, le dispositif de photodétection comporte au moins un photodétecteur et un filtre passe-bande de sorte que la composante à la fréquence 2fm + $\Delta$f et/ou fm + $\Delta$f est en dehors de la bande passante dudit filtre.

Avantageusement, les moyens aptes à injecter un faisceau lumineux à une fréquence f1 = fm + $\Delta$f dans le dispositif optomécanique, comportent une source lumineuse formée par un laser (18), par exemple une diode laser.

De manière avantageuse, les moyens aptes à injecter un faisceau lumineux à une fréquence f1 = fm + $\Delta$f dans le dispositif optomécanique, peuvent comporter une source lumineuse et un modulateur optique disposé entre la source lumineuse et le dispositif optomécanique pour moduler à f1 le faisceau lumineux injecté dans ledit guide.

En variante, les moyens aptes à injecter un faisceau lumineux à une fréquence f1 = fm + $\Delta$f dans le dispositif optomécanique, comportent des moyens de modulation du courant d'alimentation du laser.

De manière préférée, le système comporte une connexion électrique entre le résonateur et une masse électrique du système.

Le système de mesure peut également comporter des moyens situés soit directement en sortie du dispositif de photodétection, soit en sortie du dispositif de photodétection par l'intermédiaire d'un composant tel que par exemple un amplificateur ou un filtre, permettant de générer un signal à base d'un mélange de la composante à la fréquence $\Delta$f du signal de sortie du dispositif de photodétection et un signal à la fréquence fm + $\Delta$f produit par les moyens d'excitation, de sorte à générer un système de mesure auto-oscillant.

En variante, le système de mesure peut comporter des moyens situés soit en sortie du dispositif de photodétection par l'intermédiaire d'un composant tel que par exemple un amplificateur ou un filtre, permettant de générer un signal correspondant à la somme de la composante à la fréquence $\Delta$f du signal de sortie du dispositif de photodétection et un signal à la fréquence fm + $\Delta$f produit par les moyens d'excitation, de sorte à générer un système de mesure auto-oscillant.

## BRÈVE DESCRIPTION DES DESSINS

La présente invention sera mieux comprise sur la base de la description qui va suivre et des dessins en annexe sur lesquels :

- la figure 1 est une représentation schématique d'un exemple de réalisation d'un système de mesure résonant selon la présente invention dans lequel l'élément résonant est une poutre suspendue,
- la figure 2A est une représentation schématique d'un autre exemple de réalisation d'un système de mesure résonant selon la présente invention, dans lequel l'élément mobile est formé directement par un élément optique,
- la figure 2B est une représentation schématique d'un autre exemple de réalisation d'un système de mesure résonant selon la présente invention, dans lequel l'élément mobile est formé directement par un élément optique,
- les figures 3 et 4 sont des représentations schématiques de deux exemples de réalisation d'un système de mesure résonant auto-oscillant selon la présente invention,

- la figure 5 est un exemple de deux spectres optiques obtenus avec un système selon l'invention, représentant une variation de l'amplitude du signal lumineux mesurée par le photodétecteur en fonction de la longueur d'onde et pour deux positions différentes générant un décalage Δλ du pic de résonance optique,
- la figure 6 est une représentation schématique du couplage électrique apparaissant entre les moyens d'excitation et la partie mécanique et entre la partie mécanique et la masse dans un exemple de réalisation d'un système selon l'invention,
- la figure 7 est une représentation schématique du couplage électrique apparaissant entre les moyens d'excitation et la partie mécanique et entre la partie mécanique et la masse dans un autre exemple de réalisation d'un système selon l'invention.

## EXPOSÉ DÉTAILLÉ DE MODES DE RÉALISATION PARTICULIERS

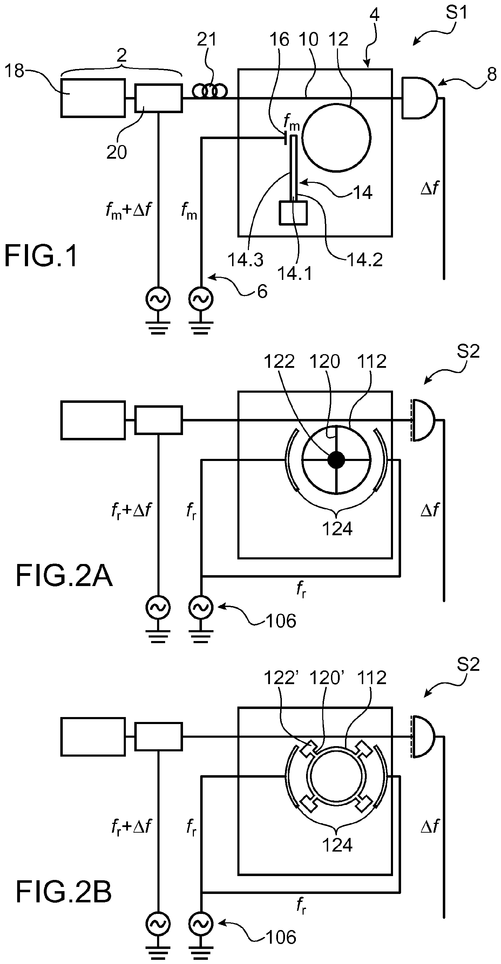

Sur la figure 1, on peut voir un exemple de réalisation d'un système de mesure résonant S1 selon l'invention.

Le système de mesure comporte des moyens de génération d'un faisceau lumineux 2, un dispositif optomécanique 4, des moyens 6 d'excitation d'un élément mobile du dispositif optomécanique et au moins un dispositif de photodétection 8.

Dans l'exemple représenté, le dispositif optomécanique 4 comporte un guide d'onde 10 dans lequel est injecté le faisceau lumineux émis par les moyens de génération 2, un anneau optique 12 à proximité du guide d'onde 10 de sorte que le guide d'onde puisse injecter le faisceau lumineux incident dans l'anneau optique 12 et collecter le faisceau transmis ou réfléchi par l'anneau optique 12.

Le dispositif optomécanique 4 comporte également un élément mobile 14 apte à être mis en vibration à une fréquence donnée ou à sa fréquence de résonance et disposé à proximité de l'anneau optique de sorte que le déplacement de l'élément mobile 14 provoque une modification de l'indice optique effectif de l'anneau optique 12 en perturbant son champ évanescent.

Dans l'exemple représenté, l'élément mobile 14 est une poutre mobile encastrée par une extrémité longitudinale 14.1 dans une partie fixe du système. La poutre 14 est disposée de sorte qu'un bord latéral 14.2 soit en regard de la périphérie extérieure de l'anneau optique 12 et de sorte qu'elle soit apte à être déplacée dans le plan de l'anneau optique 12. En variante l'élément mobile 14 pourrait être une membrane ou une masse indéformable de forme quelconque, par exemple rectangulaire, qui vibrerait dans le plan et dont l'entrefer avec le résonateur optique varierait

Les éléments du dispositif optomécanique peuvent être à l'air libre ou être encapsulés sous un environnement contrôlé, par exemple sous vide.

Selon un autre exemple, le dispositif optomécanique comporte deux guides d'onde disposés de part et d'autre de l'anneau, l'un servant à l'injection du faisceau émis par les moyens 2 et l'autre servant à collecté le faisceau sortant du guide d'onde En variante, les deux guides d'onde pourraient collecter le faisceau sortant de l'anneau optique.

Dans un autre exemple, le dispositif comporte un guide d'onde et un résonateur par exemple une poutre, le déplacement de la poutre influençant directement l'indice optique du guide d'onde.

L'anneau optique pourrait être remplacé par toute autre structure optomécanique. Par exemple, l'anneau optique pourrait être remplacé par toute structure optomécanique, par exemple un disque comme cela est décrit dans le document Favero I., Gallium Arsenide Disks as Optomechanical Resonators, In: Aspelmeyer M, Kippenberg TJ, Marquardt F, éditeurs. Cavity Optomechanics 2014. p. 149 - 156. Quantum Science and Technology - DOI10.1007/978-3-642-55312-7_7. En variante encore l'anneau pourrait être remplacé par une cavité à nanopoutre, telle que décrit dans le document Lee JY, Lu X, Lin Q. High-Q silicon carbide photonic-crystal cavities. Applied Physics Letters. January 26 2015;106(4):041106.

Les moyens de mise en mouvement de l'élément mobile 14 sont dans l'exemple représenté de type électrostatique et comportent une électrode 16 disposée en regard d'un autre bord latéral 14.3 de la poutre opposé au bord latéral 14.2 en regard de l'anneau optique 12. Lorsque l'électrode 16 est alimentée une force électrostatique s'applique sur la poutre 14 qui est alors mise en mouvement. En appliquant un signal d'excitation périodique, la poutre est mise en vibration. Les moyens d'excitation 6 sont configurés pour mettre en mouvement l'élément mobile à au moins une fréquence $f_m$ proche de la fréquence de résonance $f_r$ de l'élément mobile 14. De préférence, $f_m$ est choisie telle que $f_r - (2f_r/Q_m) \leq f_m \leq f_r + (2f_r/Q_m)$, avec $Q_m$ le facteur de qualité mécanique de l'élément mobile 14.

$f_m$ est choisie comme une fréquence de travail à laquelle on souhaite mesurer la réponse du système mécanique $x(f_m)$ (par exemple dans le domaine spectrale, $x(f_m)$ est proportionnelle à la fonction de transfert H, $x = H F$, F est la force modulée à $f_m$). Et avantageusement $f_m$ est égal à $f_r$ pour mesurer la réponse du système mécanique à la fréquence ou la réponse en amplitude est maximale.

Le signal électrique peut avoir une fréquence $f_m$ ou $f_m/2$ car la force générée est proportionnelle à la tension au carré.

En variante, la mise en vibration de l'élément mobile 14 pourrait être obtenue en utilisant des moyens d'actionnement optiques, par exemple un faisceau pompe à la fréquence $f_r$. De préférence on utilise un faisceau d'actionnement dont la longueur d'onde est différente de celle du faisceau de détection, ce qui permet de pouvoir filtrer ce signal optique qui est concurrent du signal de détection au niveau de la photodiode. En filtrant ce signal une réduction du fond de mesure peut être ainsi obtenue permettant d'atteindre de meilleurs rapports signal sur fond.

Le dispositif optomécanique présente alors une fonction de transmission optique T(x, λ), x étant une position du système mécanique et λ étant la longueur d'onde du faisceau lumineux entrant.

Au premier ordre en déplacement x, $T = T_0(\lambda)(1 + \alpha(\lambda)x)$.

Les moyens de génération d'un faisceau lumineux comportent une source lumineuse, avantageusement une source laser, comportant une diode laser 18 et des moyens de modulation 20 de sorte que l'intensité du faisceau lumineux pénétrant dans le guide d'onde soit à une fréquence fm + Δf.

Les moyens de modulation 20 peuvent moduler directement le courant d'alimentation de la diode laser.

De manière avantageuse, les moyens de modulation 20 comportent avantageusement un modulateur électro-optique interposé entre la source laser et le dispositif optomécanique, qui module l'intensité du faisceau laser. Le modulateur électro-optique a pour avantage de permettre d'augmenter la fréquence et de bénéficier d'une plus grande plage de modulation. En effet un modulateur optomécanique permet d'atteindre des fréquences d'au moins 40 GHz alors que la modulation du courant de la diode laser est limitée en fréquence, typiquement à quelques centaines de MHz.

De plus, l'amplitude de modulation du courant d'alimentation de la diode est limitée par le fait que la réponse entre la puissance du laser et le courant d'alimentation est non linéaire et par le fait que le courant d'alimentation de la diode doit être supérieur un courant seuil pour assurer le régime laser pour la diode.

Le faisceau lumineux émis par le modulateur électro-optique a une intensité qui peut s'écrire $I = I_0 + M I_0 \cos((f_r + \Delta f)t)$.

Un contrôleur de polarisation 21 peut être prévu en amont du guide d'onde 10 dans le cas où la fonction de transmission optique de l'ensemble du système est sensible à la polarisation, ce qui permet d'optimiser le couplage optomécanique. Par exemple dans le cas de l'anneau optique, une polarisation transverse électrique peut maximiser le couplage optomécanique.

Le faisceau lumineux modulé est envoyé dans une extrémité du guide d'onde 10. Le dispositif de photodétection est disposé en regard de l'autre extrémité du guide d'onde. Le dispositif de photodétection comporte par exemple au moins un photodétecteur qui mesure le signal lumineux transmis ou réfléchi.

Le signal détecté comporte une composante à la fréquence Δf et un composante à une fréquence $2f_r + \Delta f$. Si la composante en 2fr + Δf est dans la bande passante du photodétecteur, un filtre passe-bas est prévu pour supprimer cette composante. Si la composante en 2fr + Δf est en dehors de la bande passante du photodétecteur, un filtre passe-bas n'est pas requis pour supprimer cette composante.

Le fonctionnement du système de mesure de la figure 1 va maintenant être décrit dans une application à la détection de dépôt de particules.

La poutre 14 est mise en vibration sous l'effet d'une force d'actionnement à une fréquence fm. Le déplacement de la poutre a un effet sur l'indice optique effectif de l'anneau optique 12.

Un faisceau lumineux ayant une intensité modulée à la fréquence fm + Δf est injecté dans le guide d'onde 10.

Le faisceau lumineux circule dans l'anneau optique 12. Un faisceau de détection est collecté par le guide d'onde 10.

Lorsqu'une ou des particules se déposent sur les poutres, sa masse varie, provoquant une variation de sa fréquence de résonance. Cette modification de fréquence résonance va modifiée l'indice optique effectif de l'anneau optique. La fonction de transmission optique T est modifiée, le faisceau optique modifié est collecté par le guide d'onde 10 et ensuite par le dispositif de photodétection.

Le signal de sortie combine deux signaux : l'intensité modulée du faisceau lumineux et la modulation due au déplacement de la poutre.

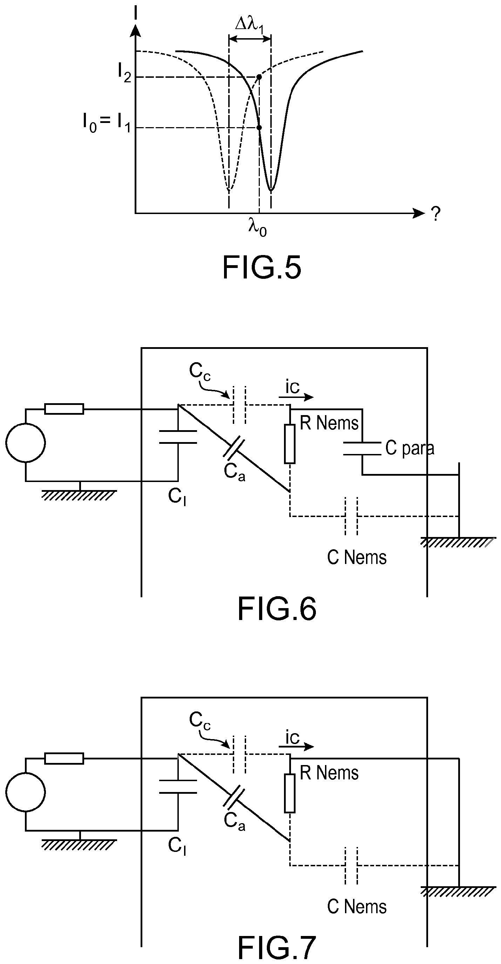

Sur la figure 5, on peut voir un exemple d'un spectre optique qui peut être obtenu avec le système de mesure selon l'invention. Dans cette représentation, il s'agit de la longueur d'onde λ et non de la fréquence. Lorsque le résonateur est excité, il se déplace entre deux postions 1 et 2.En trait plein, il s'agit de la mesure de l'intensité I égale à l1 pour la position 1 du résonateur et en pointillés il s'agit par exemple de la mesure de l'intensité I égale à $I_2$ pour la position 2 du résonateur. En l'absence de particules, le résonateur oscille à une certaine vitesse entre ces deux positions. Lorsque des particules se déposent sur le résonateur, il apparaît une variation de la fréquence de résonance du résonateur mécanique, ce qui modifie la vitesse d'oscillation du résonateur entre les deux positions et donc la vitesse du décalage du spectre optique. La variation de la vitesse de ce décalage est représentative au moins en partie de la masse déposée sur le résonateur.

Le déplacement mécanique est transcrit à la fréquence Δf, par exemple 100 kHz.

L'amplitude du signal de sortie capté par le photodétecteur est la suivante

$$I_{PD} = I \times T_0(\lambda)(1 + \alpha x)$$

Pour un mouvement $x = x(f_m) \cos(2\pi f_m t)$, en ne gardant que la partie proportionnelle au déplacement x en en posant s = $T_0\alpha$

$$I_{PD} = \{[\![I_0 + I_0 M \cos[2\pi(fm + \Delta f)t]\}$$

$$\cdot\, s\, x(fm) \cdot \cos(2\pi fm\, t) = s\, x(fm)I_0 \left\{\cos(2\pi fm\, t)\right.$$

$$\left. + \frac{M}{2}[\cos(4\pi fm\, t) + \cos(2\pi\Delta ft)]\right\}$$

La composante à Δf de l'intensité du faisceau lumineux détecté $I_{d,\Delta f}$ est donc :

$$I_{d,\Delta f} = \frac{M}{2}\, s\, x(f_m)\, I_0\, \cos(2\pi\Delta ft).$$

s est le facteur de transduction optomécanique. x(fm) est l'amplitude de la réponse mécanique de la poutre à la fréquence fm.

Le système de mesure selon l'invention permet donc de travailler à une fréquence moins élevée que fm, la résolution du système peut donc être améliorée.

En outre, en distinguant la fréquence d'excitation de la fréquence du signal de sortie le fond de mesure dû à la diaphonie est réduit.

De plus le signal de fond dû à l'auto-échauffement est sensiblement réduit. Le schéma électrique illustrant le couplage et la circulation du courant de couplage est représenté sur la figure 6.

Cc représente la capacité parasite entre l'électrode d'actionnement et les pistes électriques connectées à la poutre, Rnems représente la résistance ou impédance de la poutre 14 ou plus généralement de la partie mécanique, Ca représente la capacité de couplage entre les moyens d'excitation et la partie mécanique. On a Ca<<Cc. La capacité de couplage Ca sert l'actionnement capacitif. Ce est une capacité propre au circuit d'excitation.

Cpara représente la capacité parasite apparaissant entre la masse électrique et les pistes d'accès électriques et Cnems représente la capacité qui apparaît entre la partie mécanique et la masse.

ic est le courant de couplage qui apparaît du fait du couplage Ca et Cc entre les moyens d'excitation et la partie mécanique, couplage principalement entre les pistes d'accès des moyens d'excitation et de la partie mécanique (Cc). La capacité Cpara étant très supérieure à la capacité Cnems, son impédance est inférieure celle de la capacité Cnems ; le courant de couplage circule alors vers la masse électrique à travers une capacité parasite entre les pistes d'accès et la masse (Cpara) et non à travers la partie mécanique et la masse électrique (Cnems). L'échauffement dû à l'effet joule est donc sensiblement réduit par rapport aux systèmes de l'état de la technique en raison de l'absence de courant traversant la résistance NEMS

ic circule principalement à travers la capacité Cpara vers la masse électrique.

De manière avantageuse, la partie mécanique symbolisée par l'impédance Rnems est connectée directement à la masse. Il n'y a alors par de capacité parasite Cpara. L'auto-échauffement est encore réduit car tout le courant s'écoule par ce court-circuit.

Le schéma électrique illustrant le couplage et la circulation du courant de couplage est représenté sur la figure 7.

Par ailleurs, en choisissant Δf suffisamment faible, cette composante peut avantageusement être détectée par un photodétecteur à faible bande passante et ayant une faible puissance équivalente de bruit (NEP pour Noise Equivalent Power en terminologie anglo-saxonne). De plus une électronique basse fréquence courante telle qu'un LIA peut être utilisée, ce qui permet de détecter la phase du résonateur, à partir de laquelle on peut distinguer un actionnement cohérent d'un actionnement incohérent et également travailler dans un mode de boucle à phase asservie ou PLL (Phase lock loop en terminologie anglo-saxonne).

Il est à noter que le facteur M/2 n'implique pas une perte de performance car le bruit en amont de la photodiode, par exemple le bruit thermomécanique est atténué de la même manière. Le SNR est donc préservé.

De préférence, la valeur de Δf est choisie de manière à être au-dessus de la bande passante de mesure fixée par le résonateur mécanique $\frac{f_r}{Qm}$. De plus on choisit Δf inférieur à la bande passante du photodétecteur.

De préférence, le rapport fr/Δf est alors supérieur ou égal à 10, ce qui permet d'avoir un bon compromis entre les besoins de bande passante et les besoins de réduction de la fréquence de mesure. Par exemple pour un résonateur à 100 MHz avec un facteur de qualité Qm = 10000, il est souhaitable de disposer Δf > 10 *kHz* ce qui permet de bénéficier de toute la bande passante du résonateur. De préférence Δf > 100 kHz, ainsi on se place à une fréquence pour laquelle l'électronique possède un bruit plus faible.

Avantageusement 1 < fr/Δf < Qm, et de manière préférée 10 < fr/Δf < Qm/5.

De manière avantageuse, l'invention permet de réaliser des mesures à d'autres fréquences de résonance du résonateur et ainsi de faire des mesures à plusieurs modes mécaniques, en particulier des modes mécaniques d'ordres supérieurs, tout en conservant une bonne résolution. On peut avantageusement prévoir de répéter les mesures à différentes fréquences de résonance afin d'obtenir davantage d'informations sur les particules déposées, telles que leur taille et leur emplacement et obtenir un résultat plus complet sur la nature ou la masse des particules.

Dans le cas d'un système de mesure gravimétrique par exemple pour la détection de gaz, les molécules adsorbées sont désorbées par exemple en chauffant le résonateur.

Sur la figure 2A, on peut voir un autre exemple de réalisation S2 d'un système de mesure selon l'invention. Le système S2 diffère du système S en ce que le dispositif optomécanique utilise comme élément vibrant directement l'anneau optique.

L'anneau optique 112 est maintenu sur le support au moyen de rayons 120 reliés à une fixation 122 au support au centre de l'anneau.

Sur la figure 2B, on peut voir un autre exemple de réalisation dans lequel l'anneau optique est maintenu par des rayons extérieurs 120' ancrés sur le support par des plots 122'.

Les moyens d'excitation comportent des électrodes 124, en forme d'arc de cercle, disposées en regard du bord extérieur de l'anneau. Les électrodes sont par exemple fixées sur le support. Dans l'exemple représenté, les moyens d'excitation 106 comportent deux électrodes diamétralement opposées. Lorsque les moyens d'excitation sont activés, des forces diamétralement opposées s'appliquent à l'anneau optique 112 qui se déforme radialement et « respire ». L'anneau optique forme alors directement le résonateur.

Dans un autre exemple, on pourrait envisager d'utiliser directement le guide d'onde comme résonateur, au moins une partie du guide d'onde étant apte à être mis en vibration par les moyens d'excitation.

Le fonctionnement du système S2 est proche du fonctionnement du système S1, il diffère en ce que les particules se déposent directement sur l'anneau optique, ce qui provoque une modification de sa fréquence de résonance fr2, l'indice optique est alors modulé à la nouvelle fréquence de résonance fr2, alors qu'avant le dépôt de particules l'indice optique effectif était modulé à fr1. L'effet sur l'amplitude du flux lumineux injecté à fm + Δf est donc modifié.

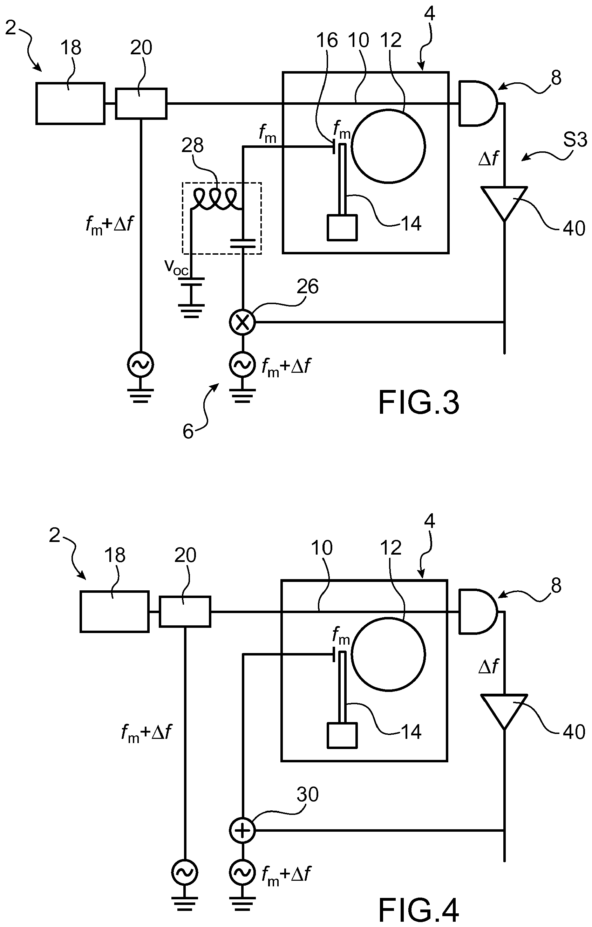

Sur les figures 3 et 4, on peut voir des exemples de systèmes de mesure selon l'invention auto-oscillants.

Sur la figure 3, le système S3 comporte les éléments du système S1 et des moyens 26 pour mélanger le signal en sortie du dispositif de photodétection à la fréquence Δf avec un signal d'actionnement à fm + Δf, par exemple en multipliant les signaux sinusoïdaux à Δf et fm + Δf de manière à générer un signal à fm. Ce signal auquel est ajouté un signal continu $V_{DC}$ au moyen d'une alimentation en T 28 ou bias tee en terminologie anglo-saxonne, est appliqué à l'électrode mettant en vibration l'élément mobile. En ajustant la phase et l'amplitude du signal à fm+Δf, on peut atteindre des conditions d'auto-oscillations. De manière avantageuse, un composant 40 tel qu'un amplificateur ou un filtre en aval de la photodiode assure le conditionnement du signal en sortie de la photodiode, i.e. il élimine des signaux parasites, et assure un gain d'amplification permettant es conditions d'auto-oscillations.

Sur la figure 4, le système S4 comporte les éléments du système S1 et des moyens 30 additionnant le signal en sortie du dispositif de photodétection à la fréquence Δf avec un signal d'actionnement à fm + Δf.

En ajustant la phase et l'amplitude du signal à fm + Δf, on peut atteindre alors des conditions d'auto-oscillations.

Comme pour le système S3, de manière avantageuse, un composant 40 tel qu'un amplificateur 40 ou un filtre en aval de la photodiode assure le conditionnement du signal en sortie de la photodiode, i.e. il élimine des signaux parasites, et assure un gain d'amplification permettant les conditions d'auto-oscillations.

Le système peut avantageusement évaluer la fréquence de résonance réelle du système mécanique évaluée en continu et s'adapter en utilisant cette valeur. En effet la fréquence de résonance peut varier au cours du temps, par exemple en fonction d'éléments extérieurs lors du dépôt de particules ou lors de leur désorption.

Comme cela a déjà été mentionné, le système de mesure résonant selon l'invention permet de réduire le fond de mesure dans le signal de sortie et de conserver une sensibilité élevée et une résolution élevée.

En outre, puisque le signal de sortie du système de mesure selon l'invention obtenu par un photodétecteur a une composante en Δf, il est possible d'utiliser un photodétecteur fonctionnant à basse fréquence et présentant une faible bande passante qui est d'un coût de revient sensiblement plus faible que les photodétecteurs à grande bande passante. Avec un photodétecteur à faible bande passante, même les modes à hautes fréquences en dehors de la bande passante du photodétecteur sont accessibles puisque c'est la valeur de Δf qui intervient. Il est alors avantageusement possible de faire une détection à différents modes et d'obtenir des informations plus complètes sur les particules déposées dans le cas de la détection de particules.

De plus, le fait de pouvoir utiliser un photodétecteur à basse fréquence contribue à améliorer le SNR car le bruit en entrée d'un tel photodétecteur est plus faible que pour les photodétecteurs à haute fréquence. De plus ces photodétecteurs présentent un gain élevé, ils ont alors un signal électrique facilement lisible à partir d'un instrument de mesure sans ajout de bruit de lecture (Voltage noise density en terminologies anglo-saxonne) du LIA ou d'un oscilloscope. De plus en travaillant à basse fréquence, un amplificateur de détection synchrone ou LIA (Lock in amplifier en terminologie anglo-saxonne) peut être utilisée permettant de mesurer également la phase du résonateur, qui permet par exemple de distinguer l'actionnement cohérent de l'actionnement incohérent (bruit brownien). En outre le fait de disposer de la phase permet de travailler en boucle à verrouillage de phase.

Par ailleurs, l'invention évite les problèmes de contrôle de polarisation électrique lié aux discontinuités d'impédances et permet une modulation efficace du signal servant à la mesure.

En outre, puisque le signal de sortie est à la fréquence $\Delta f$ qui est choisie basse, une électronique basse fréquence, par exemple fonctionnant entre 1 MHz et 10 MHz peut être suffisante pour le traitement analogique, la numérisation et l'ensemble des éléments de la chaîne de traitement de l'information. On a ainsi un gain en termes de consommation d'énergie et d'espace ASIC nécessaire pour les systèmes portables, autonomes ou qui demandent une forte miniaturisation.

Le système selon l'invention peut être fabriqué par les technologies de fabrication de circuit intégré. Il est adapté à l'intégration à très grande échelle (ou VLSI pour Very-Large-Scale Integration en terminologie anglo-saxonne).

Par exemple, le dispositif est fabriqué à partir d'une plaque SOI (Silicon on Insulator) ou silicium sur isolant. La couche supérieure en silicium peut être gravée par photolithographie pour réaliser la géométrie de l'anneau, du guide d'onde et de la poutre résonante. Ensuite une gravure partielle de l'oxyde enterré (ou Buried oxide en terminologie anglo-saxonne) est mise en oeuvre pour libérer la poutre. L'intégration sur la plaque du laser, du modulateur et du photodétecteur peut par exemple est réalisée par des techniques de report de support.

Le système de mesure est particulièrement adapté à des applications requérant à la fois une haute fréquence et une sensibilité élevée. L'application à la mesure de masse de particules par exemple dans les capteurs de masse a été plus particulièrement décrite mais il peut être appliqué pour réaliser des capteurs inertiels tels que les accéléromètres résonants, les gyromètres, dans un microscope à force atomique...

**Revendications**

1. Système de mesure résonant de type MEMS et/ou NEMS, comportant :

   - un dispositif optomécanique (4) comprenant au moins un élément résonant (14) à au moins une fréquence de résonance fr et au moins un élément optique (12) dont l'indice optique est sensible au déplacement de l'élément résonant (14),
   - des moyens d'excitation (6) de l'élément résonant (14) à au moins une fréquence de fonctionnement fm,
   - des moyens (2) aptes à injecter un faisceau lumineux dont l'intensité est modulée à une fréquence f1 = fm + $\Delta f$ dans le dispositif optomécanique,
   - un dispositif de photodétection (8) apte à mesurer l'intensité d'un faisceau lumineux de mesure sortant du dispositif optomécanique (4), l'intensité du faisceau de mesure ayant au moins une composante à une fréquence $\Delta f$.

2. Système de mesure selon la revendication 1, dans lequel la fréquence de fonctionnement fm est telle que fr-(2fr/Qm) $\leq$ fm $\leq$ fr+(2fr/Qm), avec Qm le facteur de qualité mécanique de l'élément résonant (14), le rapport fr/$\Delta f$ étant avantageusement compris entre 10 < fr/$\Delta f$ < Qm.

3. Système de mesure selon la revendication 1 ou 2, dans lequel le dispositif optomécanique (4) comporte un guide d'onde (10) et un anneau optique (12) couplé optiquement au guide d'onde (10), le guide d'onde (10) étant destiné à recevoir le faisceau lumineux issu des moyens (2) et à envoyer le faisceau lumineux transmis par le dispositif optomécanique (4), au dispositif de photodétection (8).

4. Système de mesure selon la revendication 3, dans lequel l'élément résonant (14) est disposé à proximité de l'anneau optique (12).

5. Système de mesure selon la revendication 3, dans lequel l'élément résonant est formé par l'anneau optique (112).

6. Système de mesure selon l'une des revendications 1 à 5, dans lequel les moyens d'excitation (6) sont de type électrostatique.

**7.** Système de mesure selon l'une des revendications 1 à 5, dans lequel les moyens d'excitation sont de type optique.

**8.** Système de mesure selon l'une des revendications 1 à 7, dans lequel le faisceau lumineux transmis a également une composante à une fréquence 2fm + Δf et/ou fm + Δf, le dispositif de photodétection comportant au moins un photodétecteur dont la bande passante est telle que la composante à la fréquence 2fm + Δf et/ou fm + Δf est en dehors de ladite bande passante.

**9.** Système de mesure selon l'une des revendications 1 à 7, dans lequel le dispositif de photodétection (8) comporte au moins un photodétecteur et un filtre passe-bande de sorte que la composante à la fréquence 2fm + Δf et/ou fm + Δf est en dehors de la bande passante dudit filtre.

**10.** Système de mesure selon l'une des revendications 1 à 9, dans lequel les moyens (2) aptes à injecter un faisceau lumineux à une fréquence f1 = fm + Δf dans le dispositif optomécanique, comportent une source lumineuse formée par un laser (18), par exemple une diode laser.

**11.** Système de mesure selon l'une des revendications 1 à 10, dans lequel les moyens aptes à injecter un faisceau lumineux à une fréquence f1 = fm + Δf dans le dispositif optomécanique, comportent une source lumineuse et un modulateur optique (20) disposé entre la source lumineuse et le dispositif optomécanique pour moduler à f1 le faisceau lumineux injecté dans ledit guide.

**12.** Système de mesure selon la revendication 10, dans lequel les moyens aptes à injecter un faisceau lumineux à une fréquence f1 = fm + Δf dans le dispositif optomécanique, comportent des moyens de modulation du courant d'alimentation du laser.

**13.** Système de mesure selon l'une des revendications 1 à 12, comportant une connexion électrique entre le résonateur et une masse électrique du système.

**14.** Système de mesure selon l'une des revendications 1 à 13, comportant des moyens situés soit directement en sortie du dispositif de photodétection, soit en sortie du dispositif de photodétection par l'intermédiaire d'un composant tel que par exemple un amplificateur (40) ou un filtre, permettant de générer un signal à base d'un mélange de la composante à la fréquence Δf du signal de sortie du dispositif de photodétection et un signal à la fréquence fm + Δf produit par les moyens d'excitation, de sorte à générer un système de mesure auto-oscillant.

**15.** Système de mesure selon l'une des revendications 1 à 13, comportant des moyens situés soit en sortie du dispositif de photodétection par l'intermédiaire d'un composant tel que par exemple un amplificateur (40) ou un filtre, permettant de générer un signal correspondant à la somme de la composante à la fréquence Δf du signal de sortie du dispositif de photodétection et un signal à la fréquence fm + Δf produit par les moyens d'excitation, de sorte à générer un système de mesure auto-oscillant.

**Patentansprüche**

**1.** Resonanzmesssystem vom Typ MEMS und/oder NEMS, umfassend:

- eine optomechanische Vorrichtung (4), umfassend wenigstens ein Resonanzelement (14) mit wenigstens einer Resonanzfrequenz fr sowie wenigstens ein optisches Element (12), dessen optischer Index auf eine Verlagerung des Resonanzelements (14) sensitiv ist,
- Mittel (6) zur Anregung des Resonanzelements (14) mit wenigstens einer Arbeitsfrequenz fm,
- Mittel (2), die dazu ausgelegt sind, in die optomechanische Vorrichtung einen Lichtstrahl zu injizieren, dessen Intensität mit einer Frequenz f1 = fm + Δf moduliert ist,
- eine Fotodetektionsvorrichtung (8), die dazu ausgelegt ist, die Intensität eines Messlichtstrahls zu messen, der aus der optomechanischen Vorrichtung (4) austritt, wobei die Intensität des Messstrahls wenigstens eine Komponente mit einer Frequenz Δf hat.

**2.** Messsystem nach Anspruch 1, bei dem die Arbeitsfrequenz fm derart ist, dass fr-(2fr/Qm) ≤ fm ≤ fr+(2fr/Qm), wobei Qm der mechanische Qualitätsfaktor des Resonanzelements (14) ist, wobei das Verhältnis fr/Δf vorzugsweise enthalten ist zwischen 10 < fr/Δf < Qm.

3. Messsystem nach Anspruch 1 oder 2, bei dem die optomechanische Vorrichtung (4) einen Wellenleiter (10) und einen optischen Ring (12) umfasst, der optisch mit dem Wellenleiter (10) gekoppelt ist, wobei der Wellenleiter (10) dazu ausgelegt ist, den aus den Mitteln (2) austretenden Lichtstrahl zu empfangen und den durch die optomechanische Vorrichtung (4) transmittierten Lichtstrahl zu der Fotodetektionsvorrichtung (8) zu schicken.

4. Messsystem nach Anspruch 3, bei dem das Resonanzelement (14) in der Nähe des optischen Rings (12) angeordnet ist.

5. Messsystem nach Anspruch 3, bei dem das Resonanzelement durch den optischen Ring (112) gebildet ist.

6. Messsystem nach einem der Ansprüche 1 bis 5, bei dem die Anregungsmittel (6) vom elektrostatischen Typ sind.

7. Messsystem nach einem der Ansprüche 1 bis 5, bei dem die Anregungsmittel vom optischen Typ sind.

8. Messsystem nach einem der Ansprüche 1 bis 7, bei dem der transmittierte Lichtstrahl ebenfalls eine Komponente mit einer Frequenz $2fm + \Delta f$ und/oder $fm + \Delta f$ hat, wobei die Fotodetektionsvorrichtung wenigstens einen Fotodetektor umfasst, dessen Passband derart ist, dass die Komponente mit der Frequenz $2fm + \Delta f$ und/oder $fm + \Delta f$ außerhalb des Passbands ist.

9. Messsystem nach einem der Ansprüche 1 bis 7, bei dem die Fotodetektionsvorrichtung (8) wenigstens einen Fotodetektor und ein Passbandfilter derart umfasst, dass die Komponente mit der Frequenz $2fm + \Delta f$ und/oder $fm + \Delta f$ außerhalb des Passbands des Filters ist.

10. Messsystem nach einem der Ansprüche 1 bis 9, bei dem die Mittel (2), die dazu ausgelegt sind, in die optomechanische Vorrichtung einen Lichtstrahl mit einer Frequenz $f1 = fm + \Delta f$ zu injizieren, eine Lichtquelle umfassen, die durch einen Laser (18) gebildet ist, beispielsweise eine Laserdiode.

11. Messsystem nach einem der Ansprüche 1 bis 10, bei dem die Mittel, die dazu ausgelegt sind, in die optomechanische Vorrichtung einen Lichtstrahl mit einer Frequenz $f1 = fm + \Delta f$ zu injizieren, eine Lichtquelle und einen optischen Modulator (20) umfassen, der zwischen der Lichtquelle und der optomechanischen Vorrichtung angeordnet ist, um den in den Leiter injizierten Lichtstrahl mit f1 zu modulieren.

12. Messsystem nach Anspruch 10, bei dem die Mittel, die dazu ausgelegt sind, in die optomechanische Vorrichtung einen Lichtstrahl mit einer Frequenz $f1 = fm + \Delta f$ zu injizieren, Mittel zur Modulation des Versorgungsstroms des Lasers umfassen.

13. Messsystem nach einem der Ansprüche 1 bis 12, umfassend eine elektrische Verbindung zwischen dem Resonator und einer elektrischen Masse des Systems.

14. Messsystem nach einem der Ansprüche 1 bis 13, umfassend Mittel, die entweder direkt am Ausgang der Fotodetektionsvorrichtung angeordnet sind oder unter Zwischenschaltung einer Komponente wie zum Beispiel eines Verstärkers (40) oder eines Filters am Ausgang der Fotodetektionsvorrichtung, und die es erlauben, ein Signal zu erzeugen auf Basis einer Mischung der Komponente mit der Frequenz $\Delta f$ des Ausgangssignals der Fotodetektionsvorrichtung und eines Signals mit der Frequenz $fm + \Delta f$, das durch die Anregungsmittel erzeugt ist, derart, dass ein autooszillierendes Messsystem erzeugt wird.

15. Messsystem nach einem der Ansprüche 1 bis 13, umfassend Mittel, die entweder am Ausgang der Fotodetektionsvorrichtung unter Zwischenschaltung einer Komponente wie zum Beispiel eines Verstärkers (40) oder eines Filters angeordnet sind, die es erlauben, ein Signal zu erzeugen entsprechend der Summe der Komponente mit der Frequenz $\Delta f$ des Ausgangssignals der Fotodetektionsvorrichtung und eines Signals mit der Frequenz $fm + \Delta f$, hergestellt durch die Anregungsmittel, derart, dass ein autooszillierendes Messsystem erzeugt wird.

## Claims

1. Resonating measurement system having at least MEMS and/or NEMS, comprising:

- an optomechanical device (4) comprising at least one resonating element (14) at at least one resonance frequency of fr and at least one optical element (12) whose optical index is sensitive to the displacement of the resonating element (14),
- Excitation means (6) for exciting the resonating element (14) at least at one operating frequency of fm,
- injection means (4) able to inject a light beam whose intensity is modulated at frequency f1 = fm + $\Delta$f in the optomechanical device,
- a photodetection device (8) able to measure the intensity of a light beam coming out of the optomechanical device (4), the intensity of the measurement beam having at least one component at frequency $\Delta$f.

2. The resonating measurement system according to claim 1, in which the operating frequency fm is such that fr-(2fr/Qm) ≤ fm ≤ fr+(2fr/Qm), with Qm being the mechanical quality factor of the resonating element (14), the ratio fr/$\Delta$f being advantageously between 10 < fr/$\Delta$f < Qm.

3. The resonating measurement system according to claim 1 or 2, in which the optomechanical device (4) includes a wave guide (10) and an optical ring (12) optically coupled to the wave guide (10), the wave guide (10) being configured to receive the light beam emitted by the means (2) and to send the transmitted light beam via the optomechanical device (4) to the photodetector device (8).

4. The resonating measurement system according to claim 3, in which the resonating element (14) is positioned in the vicinity of the optical ring (12).

5. The resonating measurement system according to claim 3, in which the resonating element is formed by the optical ring (112).

6. The resonating measurement system according to one of the claims 1 to 5, in which the excitation means are of the electrostatic type.

7. The resonating measurement system according to one of the claims 1 to 5, in which the excitation means are of the optical type.

8. The resonating measurement system according to one of the claims 1 to 7, in which the transmitted light beam also has a component at frequency 2fm + $\Delta$f and/or fm + $\Delta$f, the photodetection device comprising at least one photodetector whose bandwidth is such that the component at frequency 2fm + $\Delta$f and/or fm + $\Delta$f is outside said bandwidth.

9. The resonating measurement system according to one of the claims 1 to 7, in which the photodetection device (8) has at least one photodetector and a bandpass filter so that the component at frequency 2fm + $\Delta$f and/or fm + $\Delta$f is outside of the bandwidth of said filter.

10. The resonating measurement system according one of the claims 1 to 9, in which the means able to inject a light beam at a frequency f1 = fm + $\Delta$f in the optomechanical device, comprises a light source formed by a laser, for example a laser diode.

11. The resonating measurement system according to one of the claims 1 to 10, in which the injection device at frequency f1 = fm + $\Delta$f in the optomechanical device, comprises a light source and an optical modulator (20) positioned between the light source and the optomechanical device to modulate to f1 the light beam injected into the said guide.

12. The resonating measurement system according to claim 10, in which the means able to inject a light beam at frequency f1 = fm + $\Delta$f in the optomechanical device, includes modulation means of the laser supply current.

13. The resonating measurement system according to one of the claims 1 to 12, containing an electrical connection between the resonator and an electrical ground of the system.

14. The resonating measurement system according to one of the claims 1 to 13, comprising means either located directly at the photodetection device output, either at the photodetection device output through a component such as an amplifier (40) or a filter, allowing to generate a signal on the basis of a mixture of the component at frequency $\Delta$f of the photodetection device output signal and a signal at frequency fm + $\Delta$f generated by the excitation means, so as to generate a self-oscillating measurement system.

15. The resonating measurement system according to one of the claims 1 to 13, comprising means located either in the photodetection device output through a component such as an amplifier (40) or a filter, allowing to generate a signal corresponding to the sum of the component at frequency $\Delta f$ of the photodetection device output signal and a signal at frequency $fm + \Delta f$ generated by the excitation means, so as to generate a self-oscillating measurement system.

FIG.1

FIG.2A

FIG.2B

FIG.3

FIG.4

FIG.5

FIG.6

FIG.7

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2005081929 A2

**Littérature non-brevet citée dans la description**

- **I. BARGATIN ; E. B. MYERS ; J. ARLETT ; B. GUDLEWSKI ; M. L. ROUKES.** Sensitive detection of nanomechanical motion using piezoresistive signal downmixing. *Appl. Phys. Lett.,* 2005, vol. 86 (13), 133109

- **FAVERO I.** Gallium Arsenide Disks as Optomechanical Resonators. *Cavity Optomechanics,* 2014, 149-156
- *Quantum Science and Technology*
- **LEE JY ; LU X ; LIN Q.** High-Q silicon carbide photonic-crystal cavities. *Applied Physics Letters,* 26 Janvier 2015, vol. 106 (4), 041106